Europäisches Patentamt

European Patent Office

Office européen des brevets

(11) Numéro de publication: **0 016 697**
**B1**

(12) **FASCICULE DE BREVET EUROPEEN**

(45) Date de publication du fascicule du brevet:
**10.08.83**

(51) Int. Cl.³: **F 16 B 13/00**

(21) Numéro de dépôt: **80400347.3**

(22) Date de dépôt: **14.03.80**

(54) **Dispositif de fixation d'objets sur une paroi en matériau de construction et procédé de fabrication du dispositif.**

(30) Priorité: **20.03.79 FR 7907034**
**20.12.79 FR 7931276**

(43) Date de publication de la demande:
**01.10.80 Bulletin 80/20**

(45) Mention de la délivrance du brevet:
**10.08.83 Bulletin 83/32**

(84) Etats contractants désignés:
**AT BE CH DE GB IT LU NL SE**

(56) Documents cités:
**DE-C-914 548**
**FR-A-1 069 159**
**FR-A-1 581 087**
**FR-A-2 020 589**
**FR-A-2 106 704**
**GB-A-1 358 223**
**US-A-2 914 983**

(73) Titulaire: **SIMAT Société Internationale pour le Matériel,
48, rue Ampère, F-75017 Paris (FR)**

(72) Inventeur: **Bienaime, Daniel, 222, Boulevard Pereire,
F-75017 Paris (FR)**

(74) Mandataire: **Weinstein, Zinovi et al, Cabinet Z.
WEINSTEIN 20, Avenue de Friedland, F-75008 Paris (FR)**

ACTORUM AG

Dispositif de fixation d'objets sur une paroi en matériau de construction et procédé de fabrication du dispositif

La présente invention concerne essentiellement un dispositif de fixation d'objets sur une paroi en matériau de construction, un procédé en comportant application ainsi qu'un procédé de fabrication du dispositif.

On connaît déjà divers dispositifs de fixation d'objets sur une paroi en matériau de construction à faible résistance à la compression, notamment du béton cellulaire, au moyen d'éléments d'ancrage dans ledit matériau, tels que vis ou clous, au moyen de chevilles expansibles à douille creuse taraudée, relativement courtes. Selon la technique connue, ces chevilles sont enfoncées dans des trous borgnes préalablement forés en venant affleurer la surface du matériau et elles reçoivent ensuite l'élément d'ancrage tel qu'une vis qui, en s'y vissant, provoque l'expansion et l'ancrage de la cheville.

Cependant, comme la cheville est enfoncée à une profondeur faible ou limitée, donc proche de la surface et qu'elle présente une forme sensiblement cylindrique, des efforts alternés sur l'élément d'ancrage, tel qu'une vis, lui font progressivement prendre du jeu dans son logement en compromettant ainsi la solidité de la fixation.

Par ailleurs, dans le cas particulier du béton cellulaire, notamment du béton ayant une densité généralement comprise entre 0,4 et 0,6 et qui présente donc une structure de faible résistance à la compression, l'expérience montre en outre qu'un corps allongé cylindrique rond, notamment en acier, enfoncé dans ce béton cellulaire, n'y tient pas très fortement et peut être arraché sans trop de difficultés, notamment en raison de sa faible surface latérale et, par conséquent, de sa pression d'appui ou de contact relativement grande sous la charge, qui provoque un écrasement du béton cellulaire.

On connaît également divers dispositifs de fixation constitués par des chevilles creuses relativement longues, dites à déviation de clou ou de pointe qui sont cylindriques rondes et reçoivent un clou provoquant la sortie latérale de deux ergots d'ancrage saillants et une déviation de la partie extrême du clou qui se recourbe et sort latéralement en saillie en pénétrant dans le béton.

Cependant, ce dispositif comporte les mêmes inconvénients, c'est-à-dire un accrochage, et par conséquent une résistance à l'arrachement, relativement médiocre, et il se produit toujours un écrasement du béton sous charge alternée avec une création de jeu.

Par conséquent, les dispositifs de fixation connus, utilisés sur le marché, ne permettent pas d'aboutir à un bon ancrage profond ni d'améliorer la résistance du béton cellulaire aux efforts radiaux, ce qui résulte dans tous les cas en une mauvaise fixation, ce qui est inadmissible.

La présente invention a donc pour but de remédier aux inconvénients précités en fournissant une solution qui permette d'obtenir une fixation tout à fait sûre dans tous les types de matériaux de construction, tels que matériaux durs ou à faible résistance à la compression, bois, et qui permette l'utilisation de fixations courantes, notamment dans des matériaux cellulaires, en améliorant leur tenue axiale et radiale tout en facilitant la pose de la fixation.

Cette solution consiste selon la présente invention en un dispositif de fixation d'objets sur une paroi en matériau de construction, le dispositif comportant un élément d'ancrage, tel qu'un clou à déviation ou une vis coopérant avec une cheville à expansion, cet élément s'ancrant principalement par sa partie éloignée de la surface de ladite paroi; caractérisé en ce que le dispositif comporte également une pièce de guidage formant douille de longueur suffisante pour assurer un ancrage à grande profondeur axiale et qui comporte sur son axe longitudinal un trou dans lequel est introduit et guidé l'élément d'ancrage au moins sur sa partie qui est proche de la surface de ladite paroi; et en ce que la section transversale droite de la pièce de guidage est croissante sur la plus grande partie de sa longueur utile, vers l'extrémité apparente destinée à affleurer la surface de la paroi en position montée, cette section croissante réalisant par enfoncement de la pièce de guidage dans ledit matériau une compression progressive de la zone superficielle du matériau au contact de la pièce de guidage, cette compression étant maximale vers ladite extrémité apparente.

Selon une variante, le trou précité permettant l'introduction et le guidage de l'élément d'ancrage peut être débouchant, c'est-à-dire, traverser de part en part la pièce de guidage.

Selon une caractéristique particulièrement avantageuse, l'extrémité de la pièce de guidage de plus petite section, ou petite extrémité, comprend un prolongement en forme de tige creuse, disposé sensiblement selon l'axe longitudinal de la pièce de guidage.

Selon une autre caractéristique particulièrement intéressante, la pièce de guidage a un profil général sensiblement pyramidal à section transversale approximativement polygonale. On doit noter à ce sujet qu'une section transversale carrée, trapézoïdale, rectangulaire ou en étoile est particulièrement préférée.

Selon une variante, la pièce de guidage peut avoir un profil général sensiblement conique à section transversale approximativement curviligne y compris circulaire ou encore un profil général externe torsadé ou hélicoïdal.

De même, la pièce de guidage précitée peut comporter au moins en partie sur ses faces latérales externes et/ou sur ses arêtes des éléments extérieurement saillants, tels que des ailettes, rugosités de surface, languettes, crantages améliorant l'accrochage ou ancrage dans le matériau de construction précité.

Par ailleurs, selon un mode de réalisation particulièrement avantageux, la pièce de guidage comprend des ailettes extérieurement saillantes de dimensions suffisantes pour assurer plusieurs zones de compression du matériau le cas échéant, lesdites ailettes ayant un profil général croissant, de préférence indépendant du profil de base ou âme de la pièce, en direction de la face arrière apparente, de façon à obtenir un profil de la face apparente de section transversale droite maximale en réalisant ainsi une compression maximale au niveau de la face apparente.

Selon une variante de ce mode de réalisation, l'âme de la pièce de guidage comprend au moins une partie de sa longueur constituée par un tube creux cylindrique ou légèrement conique. Avantageusement, les ailettes précitées forment corps avec le tube creux cylindrique ou légèrement conique précité et sont de section transversale axiale généralement croissante vers la face apparente afin d'obtenir une conicité importante de la pièce.

Selon une autre variante, les ailettes peuvent avoir un profil inégal, ledit profil étant cependant maximal vers la face apparente.

Selon encore un mode de réalisation particulier, les ailettes précitées ont un profil de pente différente depuis le nez de la pièce de guidage vers la face arrière apparente de ladite pièce de guidage. Avantageusement, le profil des ailettes dans une région proche du nez de la pièce de guidage est à faible pente tandis que le profil des ailettes dans une région proche de la face arrière apparente de la pièce de guidage est à forte pente, afin d'obtenir une fixation excellente dans un bi-matériau, le nez de la pièce de guidage étant par exemple dans un matériau dur tandis que la face arrière apparente de la pièce de guidage est dans un matériau compressible, tel que du béton cellulaire.

Selon une autre variante, l'âme de la pièce de guidage comprend au moins une partie conique, les ailettes précitées étant réalisées par passage de la pièce conique dans une filière appropriée pour réaliser des creux définissant les ailettes précitées.

Selon encore une autre variante de réalisation, au moins certaines des ailettes précitées peuvent avoir leur profil de base de largeur sensiblement constante sur au moins une partie de la longueur de la pièce de guidage ou bien avoir leur profil de base de largeur décroissante en direction du nez de la pièce, de manière à aboutir dans ce dernier cas à un affinement des ailettes au voisinage du nez de la pièce de guidage.

Selon un autre mode de réalisation, la pièce de guidage peut comprendre au moins une des ailettes précitées comprenant dans sa masse un orifice d'axe généralement parallèle à l'axe de la pièce de guidage depuis la face arrière de la pièce de guidage vers le nez de la pièce, ledit orifice débouchant sur le flanc de ladite ailette afin de permettre le passage d'un élément d'ancrage annexe, tel qu'un clou à déviation.

Selon encore une autre variante de réalisation, la pièce de guidage peut comprendre un ou plusieurs orifices formant évent d'injection pour combler les creux du matériau et augmenter sa résistance.

Selon un mode de réalisation particulier, les ailettes précitées sont suffisamment espacées entre elles pour laisser apparaître le profil de l'âme de la pièce de guidage dans les creux formés entre les ailettes, au moins sur la plus grande partie de la pièce de guidage depuis le nez vers sa face apparente.

On peut donc constater que le dispositif selon la présente invention est particulièrement adapté à tous les types de matériau de construction. Ainsi, dans le cas d'un matériau dur on pourra choisir une pièce de guidage ayant des ailettes à faible pente, le profil des ailettes étant progressivement affiné ou réduit afin de permettre leur écrasement pour fournir une zone de grippage dans le matériau.

Egalement, on peut constater que le dispositif de fixation de la présente invention se présente sous la forme d'un «coin» que l'on peut enfoncer par martelage dans le matériau, par exemple cellulaire, directement ou bien dans le cas de l'utilisation d'une cheville, notamment à expansion, que l'on peut enfoncer en le guidant sur un trou de petit diamètre préalablement foré au fond duquel on a préalablement placé la cheville, ou encore on peut enfoncer simultanément l'ensemble cheville-pièce de guidage ou coin préalablement monté.

Le dispositif de fixation de la présente invention permet ainsi d'enfoncer profondément au cœur de la paroi une fixation initialement prévue pour être apparente en lui conférant ainsi une meilleure résistance à l'arrachement. Par ailleurs, le dispositif de la présente invention permet de ne plus soumettre cette fixation aux efforts radiaux d'un montage trop rasant ainsi que de reprendre ces efforts radiaux sur une surface très supérieure au diamètre nominal de la cheville au niveau de la paroi.

En outre, le dispositif de la présente invention permet de façon essentielle, due à sa forme en coin précitée, de créer autour de la pièce de guidage formant douille une forte compression, notamment dans le cas de matériau cellulaire par écrasement de sa structure et ainsi d'aboutir, de façon essentielle à augmenter progressivement cette compression ou pression à partir de la petite extrémité de la pièce de guidage jusqu'à la grande extrémité affleurant la face extérieure de la paroi, cette compression ou pression étant maximale au niveau de la face extérieure de la paroi.

Il en résulte que l'on obtient simultanément, grâce à l'élargissement vers l'extérieur de la pièce de guidage, des possibilités de charges radiales très supérieures puisqu'elles sont réparties sur une plus grande surface ainsi qu'un matériau plus dense car comprimé, ce qui conduit à une meilleure tenue aux vibrations du fait de cette modification de densité, cette densité s'accroissant progressivement de la petite extrémité de la pièce de guidage jusqu'à sa grande extrémité pour être maximale au niveau de cette grande extrémité et, donc, au niveau de la face extérieure de la paroi.

De même, comme indiqué précédemment, dans les cas d'isolation, de cloisons, de bardage où il existe au moins deux zones de matériau de construction de dureté différente connues, par exemple une première zone vers la face apparente de la paroi, de faible dureté, constituée par exemple par une isolation en béton cellulaire, et une deuxième zone interne constituée, par exemple, par un mur en béton dur, on peut employer une pièce de guidage dont la partie avant ou nez comprend des ailettes à faible pente car dans ce cas on ne recherche pas la compression mais essentiellement le grippage par écrasement des ailettes tandis que la partie arrière de la pièce comprend des ailettes à forte pente car dans ce cas on recherche une compression importante de l'autre matériau de construction.

D'autre part, la présence d'orifices formant évent d'injection permet d'injecter divers produits susceptibles de remplir des trous existant dans le matériau et d'y durcir en obtenant ainsi une résistance excellente de la pièce de guidage, cette caractérisitque s'ajoutant à la résistance propre des éléments de fixation.

Par ailleurs, la pièce de guidage du dispositif de fixation de la présente invention peut être employée sans aucun inconvénient avec tous les dispositifs de fixation connus, et notamment ceux spécifiques du béton cellulaire tels que les clous à déviation ou des systèmes de pointes, vis ou outils coopérant avec une cheville à expansion.

On doit noter à ce sujet que le dispositif de la présente invention permet, grâce à son profil précité, d'éviter dans certains cas tous perçages préalables du matériau, ce qui facilite encore l'opération de pose.

D'autre part, le dispositif de la présente invention peut être grandement amélioré si l'extrémité de petite section, ou petite extrémité comprend des moyens à expansion. Selon un mode de réalisation particulier, le trou de la pièce de guidage est borgne et les moyens à expansion comprennent une fente longitudinale aboutissant sensiblement au niveau du fond de ce trou borgne; ce qui permet le passage de l'élément d'ancrage depuis le trou borgne dans la fente en provoquant son élargissement et l'expansion des lèvres de la fente en résultant ainsi en la création d'une deuxième zone d'accroissement de densité du matériau par compression. Cette deuxième zone permet d'une part, de favoriser l'ancrage de la pièce de guidage et, d'autre part, de façon essentielle, dans le cas de l'emploi d'une cheville, de créer une zone de forte densité en arrière de la cheville qui permettra par la suite d'empêcher avec une grande efficacité que cette cheville soit tirée vers la surface de la paroi. Cette fente améliore donc grandement l'efficacité de la pièce de guidage et de là, du dispositif de fixation.

Selon encore une autre variante particulièrement intéressante, la pièce de guidage peut être constituée par un profilé et dans ce cas les moyens à expansion peuvent être constitués par un pli formé en repliant l'une des deux extrémités sur l'autre extrémité. Ce pli est défait lors de l'introduction de l'élément d'ancrage, ce qui permet de séparer les extrémités et de réaliser la deuxième zone précitée de densité élevée permettant l'amélioration de la fixation.

Enfin, la présente invention concerne un procédé de fabrication d'un dispositif précité dont la pièce de guidage comprend des ailettes creuses, caractérisé en ce qu'on réalise un premier emboutissage d'une tôle ou plaque plane pour former un cône ou un tronc de cône puis on réalise un deuxième emboutissage pour réaliser les ailettes précitées, de préférence avec les bords latéraux internes de chaque ailette appliqués l'un contre l'autre. Avantageusement, lorsque le premier emboutissage forme un tronc de cône par roulage, on solidarise les bords latéraux libres par exemple par soudure.

D'autres buts, caractéristiques et avantages de la présente invention apparaîtront à la lumière de la description explicative qui va suivre, faite en référence aux dessins annexés représentant plusieurs modes de réalisation d'un dispositif de fixation selon la présente invention, actuellement préférés donnés simplement à titre d'illustration et qui ne sauraient donc en aucune façon limiter la portée de la présente invention. Dans les dessins:

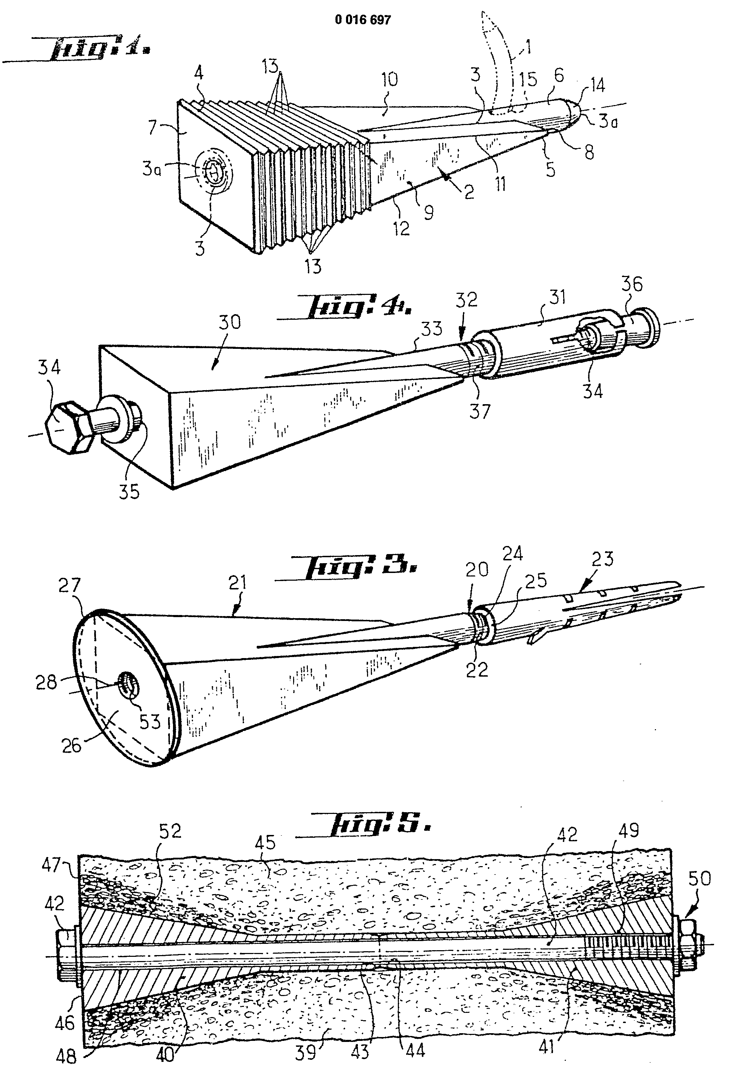

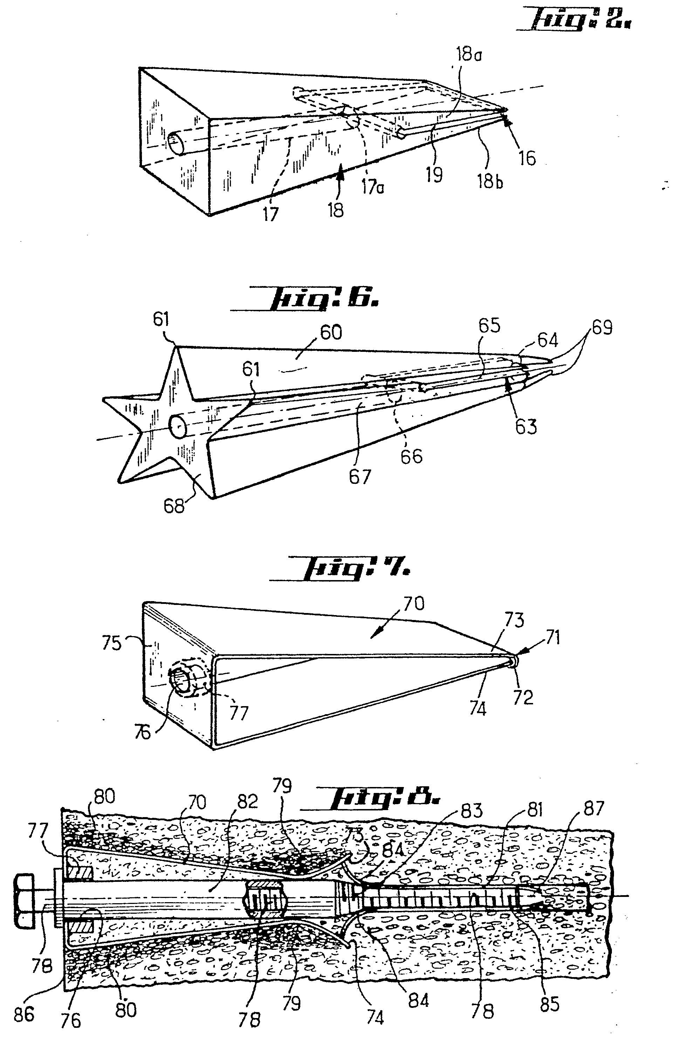

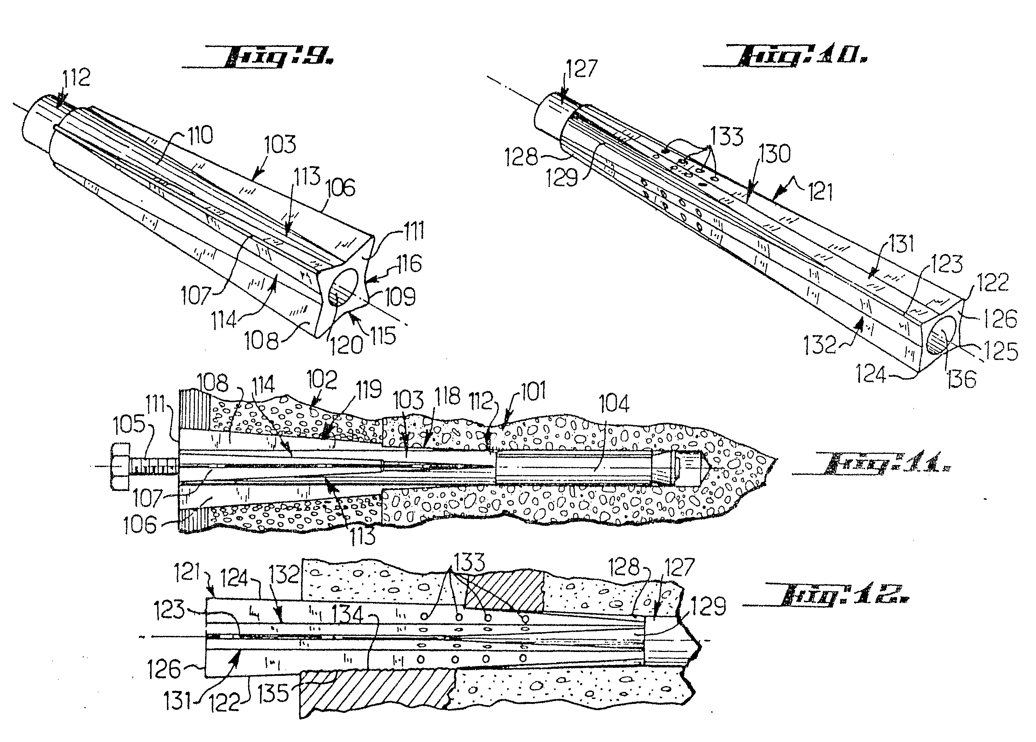

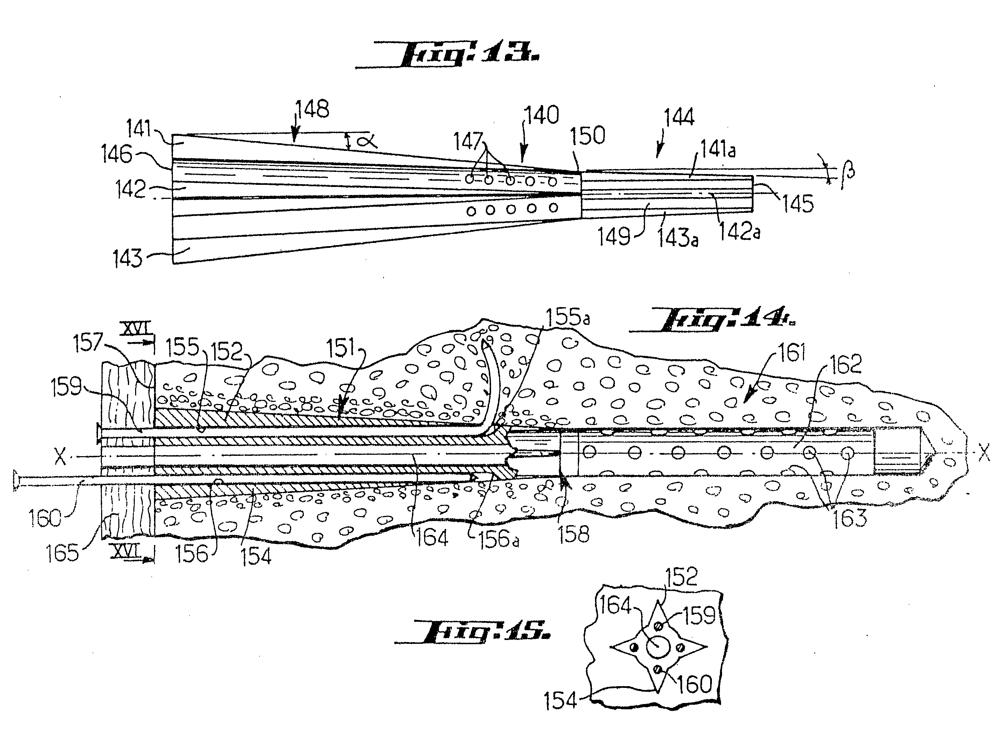

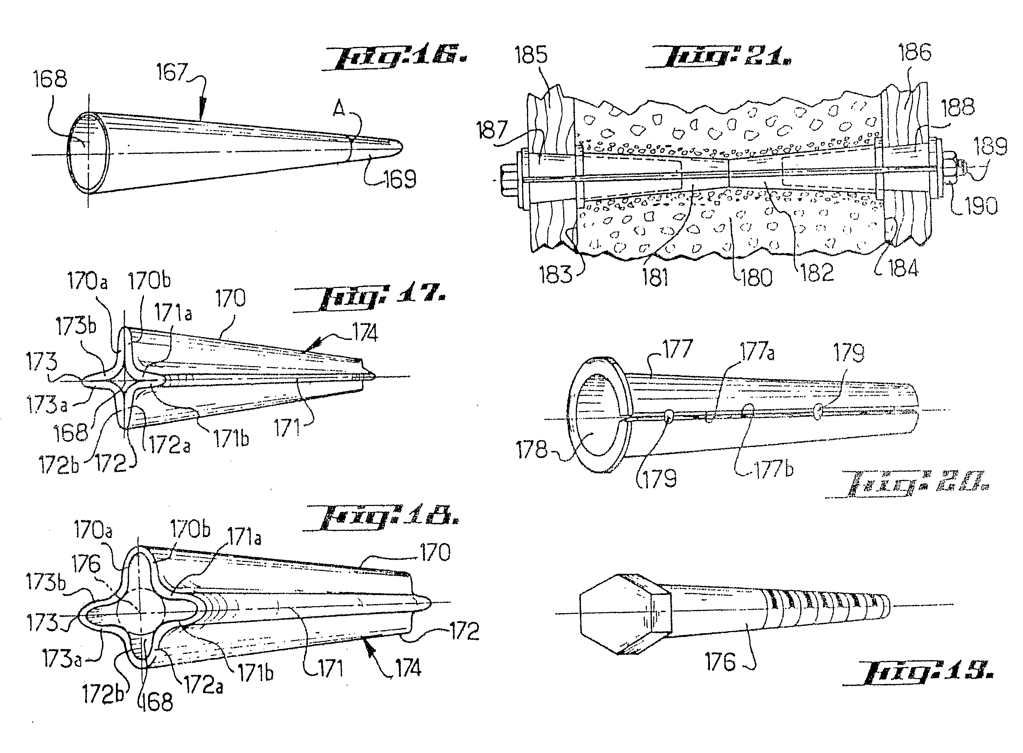

La fig. 1 est une vue en perspective d'un premier mode de réalisation d'un dispositif de fixation de la présente invention susceptible d'utiliser comme élément d'ancrage un clou à déviation; la fig. 2 représente une variante du mode de réalisation représenté à la fig. 1 de la pièce de guidage du dispositif de fixation de la présente invention comprenant des moyens à expansion; la fig. 3 représente encore une variante du mode de réalisation représenté à la fig. 1 d'un dispositif de fixation de la présente invention coopérant avec une cheville à expansion; la fig. 4 représente une autre variante d'un dispositif de fixation de la présente invention coopérant avec un autre type de cheville à expansion; la fig. 5 représente l'emploi de deux dispositifs de fixation selon la présente invention dans le cas d'une fixation traversante, non revendiquée dans le brevet, en coupe axiale; la fig. 6 représente encore une variante du mode de réalisation représenté à la fig. 1 de la pièce de guidage du dispositif de fixation de la présente invention; la fig. 7 représente également une autre variante de la pièce de guidage comprenant des moyens à expansion; la fig. 8 représente la pièce de guidage de la fig. 7 à l'état monté dans du béton cellulaire; la fig. 9 représente en perspective encore un mode de réalisation d'une pièce de guidage du dispositif de fixation selon la présente invention; la fig. 10 représente un autre mode de réalisation de la pièce de guidage; la fig. 11 représente en position montée la pièce de guidage de la fig. 9; la fig. 12 représente en position partiellement montée la pièce de guidage de la fig. 10, avec orifices formant évent d'injection, dans un matériau ayant des zones de dureté différente, tel que de la maçonnerie; la fig. 13 représente encore un autre mode de réalisation de la pièce de guidage selon la présente invention; la fig. 14 représente avec coupe partielle un autre mode de réalisation de la pièce de guidage en position montée dans un matériau à faible résistance à la compression, tel que du béton cellulaire; la fig. 15 représente une vue en coupe selon la ligne de trace XIV–XIV de la figs 14; les figs. 16 à 18 représentent schématiquement en perspective les différentes étapes d'élaboration d'un autre mode de réalisation d'une pièce de guidage selon la présente invention dont les ailettes sont creuses; la fig. 19 représente un élément d'ancrage spécifique du mode de réalisation représenté aux figs 16 à 18, constitué par une vis conique autotaraudeuse; la fig. 20 représente un autre mode de réalisation de l'ébauche avant réalisation des ailettes montrées à la fig. 17 par emboutissage; et, la fig. 21 représente en coupe une fixation traversante, non revendiquée dans le brevet, réalisée avec diverses pièces de guidage conformes à celles obtenues à la fig. 17.

En référence à la fig. 1, un dispositif de fixation d'objets sur une paroi en matériau de construction, tel que matériau dur ou à faible résistance à la compression, bois, ou tout autre matériau de construction, au moyen d'éléments 1 permettant l'ancrage dans ledit matériau, tels que vis ou clous est caractérisé selon la présente invention en ce qu'il comprend une pièce de guidage 2 dudit élément d'ancrage 1 formant douille, comportant suivant son axe longitudinal un trou 3 permettant l'introduction et le guidage de l'élément d'ancrage 1, de longueur suffisante pour assurer un ancrage profond dans ledit matériau de l'élément d'ancrage 1. Par ailleurs, la section transversale droite est croissante sur la plus grande partie de sa longueur utile vers l'extrémité apparente 4, destinée à affleurer la surface de la paroi en position montée. Ainsi, la pièce de guidage 2 comprend une extrémité de grande section 4 ou grande extrémité et une extrémité de petite section 5 ou petite extrémité.

Dans le cas représenté, le trou 3 est débouchant et traverse ainsi de part en part la pièce de guidage 2. Par ailleurs, selon une caractéristique avantageuse de ce dispositif, l'extrémité de plus petite section ou petite extrémité 5, comprend un prolongement 6 en forme de tige creuse, disposé sensiblement selon l'axe longitudinal de la pièce de guidage 2. On doit noter à ce sujet que ce prolongement 6 peut être formé par une tige creuse enfoncée dans le trou 3 de la pièce de guidage 2, donc prévue de longueur suffisante pour dépasser de la pièce de guidage 2, et, dans ce cas, c'est l'orifice 3a de cette tige creuse 6 qui définit le trou 3 précité permettant l'introduction et le guidage de l'élément d'ancrage 2. D'autre part, selon une variante, ce prolongement 6 peut former une partie intégrante de la pièce de guidage 2 qui est alors dans ce cas constituée par une pièce monobloc par exemple formée par moulage selon des techniques connues en soi.

Selon une autre caractéristique du dispositif de fixation de la présente invention, la pièce de guidage 2 a au moins une (7) de ses faces terminales (7, 8) sensiblement plane, de préférence, la face terminale 7 apparente de la pièce 2, comme représenté, cette face 7 étant disposée avantageusement dans un plan approximativement perpendiculaire à l'axe longitudinal de la pièce de guidage 2.

Selon un mode de réalisation particulièrement intéressant, la pièce de guidage 2 a un profil général sensiblement pyramidal à section transversale approximativement polygonal. A ce sujet, on doit noter que cette section transversale peut être carrée, comme représenté à la fig. 1, ou bien trapézoïdale, rectangulaire ou en forme d'étoile, comme représenté à la fig. 6. Cette forme en étoile est particulièrement avantageuse car elle permet d'obtenir un nombre important d'arêtes, ce qui permet également d'augmenter la surface d'appui de la pièce de guidage.

Selon une autre variante, la pièce de guidage peut avoir un profil général sensiblement conique à section transversale approximativement curviligne y compris circulaire.

Selon encore une variante de réalisation, la pièce de guidage 2 peut avoir un profil externe torsadé ou hélicoïdal.

Par ailleurs, la pièce de guidage 2 peut comporter avantageusement au moins en partie sur ses faces latérales externes, telles que 9, 10 et/ou sur ses arêtes, telles que 11, 12, des éléments 13 extérieurement saillants, tels que des ailettes, rugosités de surface, languettes, crantages (comme représenté), améliorant l'accrochage ou l'ancrage dans le matériau de construction de la pièce de guidage 2. A ce sujet, on doit noter que la pièce de guidage 2 est avantageusement choisie brute de fabrication étant donné que l'on recherche un aspect extérieur rugueux et des angles vifs pour favoriser l'accrochage et la tenue du dispositif de fixation de la présente invention dans le matériau de la paroi sur laquelle on cherche à fixer des objets. Le mode de réalisation représenté à la fig. 6 satisfait particulièrement ces exigences.

Selon une autre caractéristique particulièrement avantageuse du dispositif de fixation de la présente invention, l'extrémité 14 ou nez du prolongement 6 formant tige de la pièce de guidage 2 est conique tronquée, le sommet du cône étant dirigé vers l'extérieur. Ainsi, ce nez 14 conique peut servir de cône d'expansion d'une cheville classique avec laquelle peut coopérer la pièce de guidage 2, comme représenté à la fig. 3, et/ou au guidage de la pièce 2, dans le cas d'un forage préalable dans la paroi, facilitant l'enfoncement correct de la pièce 2 en un endroit prédéterminé.

Selon une variante de réalisation particulièrement intéressante, représentée à la fig. 2, l'extrémité de petite section comprend des moyens à expansion 16. Dans ce cas, le trou 17 de la pièce de guidage 18 est borgne et les moyens à expansion 16 comprennent une fente longitudinale 19 aboutissant sensiblement au niveau du fond 17a du trou borgne 17 de manière à permettre le passage à force de l'élément d'ancrage depuis le trou borgne 17 dans la fente 19 en élargissant celle-ci, ce qui provoque l'expansion des lèvres 18a, 18b créant une deuxième zone d'augmentation de densité du matériau comme cela sera explicité plus loin en référence aux figs 7 et 8.

On doit noter que selon le mode de réalisation représenté à la fig. 3, l'extrémité ou nez 20 du prolongement formant tige d'une pièce de guidage 21 peut comprendre des moyens de liaison 22 avec une cheville 23, tels qu'une denture, un crantage ou taraudage coopérant avec des moyens complémentaires 24 prévus à l'extrémité 25 de la cheville 23.

Selon une caractéristique préférentielle, lorsque la pièce de guidage 21 est utilisée en combinaison avec une cheville 23, l'ensemble pièce 21 – cheville 23 est réalisé en un seul élément monobloc, rigide, ce qui facilite l'opération de pose, comme cela sera explicité plus loin. Avantageusement, au moins la pièce de guidage 21 du dispositif de fixation de la présente invention est réalisée en une matière métallique oxydable se recouvrant d'une couche externe superficielle d'oxyde fortement adhérente, rugueuse et inaltérable, de préférence constituée par l'aluminium ou un alliage d'aluminium.

Par ailleurs, la pièce de guidage 21 peut comprendre des moyens d'adaptation de la face latérale 26 de l'extrémité de plus grande section, ou face de frappage, à des appareils de fixation, notamment à cartouche ou à percussion, ce qui permet de faciliter la pose du dispositif de fixation.

En outre, l'extrémité de frappage 26 de la pièce de guidage 21 peut comprendre une collerette 27 de retenue sur laquelle débouche le trou 28 de la pièce de guidage 21 afin de permettre l'insertion d'un élément d'ancrage pour permettre de le rendre solidaire de la cheville 23 en provoquant son expansion.

A la fig. 4, on a représenté un dispositif de la présente invention selon lequel une pièce de guidage, selon l'invention, 30 coopère avec une cheville à expansion 31 par l'extrémité ou nez 32 de son prolongement 33 tandis qu'un élément d'ancrage 34 est inséré dans le trou 35 de la pièce de guidage 30 et vient se visser dans la partie mobile 36 tronconique de la cheville en provoquant son expansion et l'ancrage de celle-ci.

On doit noter que l'extrémité ou nez 32 de la pièce de guidage peut ne pas être tronconique comme représenté à la fig. 4 tout en comportant de préférence des moyens de liaison 37 avec la cheville 31 analogues à ceux représentés à la fig. 3.

Enfin, dans le cas d'une fixation traversante, comme celle représentée à la fig. 5, on dispose deux pièces de fixation 40, 41 face à face de part et d'autre du mur 39 et on introduit ensuite un élément d'ancrage 42 tel qu'une tige filetée ou un boulon de longueur appropriée, l'extrémité ou nez 43, 44 de chaque pièce de guidage 40, 41 permettant le guidage de l'élément d'ancrage. On doit noter à la fig. 5 que les pièces de guidage 40, 41 sont monoblocs.

L'opération de pose d'un dispositif de fixation de la présente invention est réalisée selon le procédé suivant:

En référence à la fig. 5, ce procédé consiste à enfoncer dans le matériau 45 la pièce de guidage 40 jusqu'à ce que la grande extrémité 46 affleure la surface de la paroi 47, puis à introduire l'élément d'ancrage 42 dans le trou 48 de la pièce de guidage 40 et à enfoncer l'élément d'ancrage dans le matériau. Bien entendu, dans le cas d'une fixation traversante on enfonce sur l'autre côté du mur une autre pièce de guidage 41 et dans ce cas l'élément d'ancrage 42 traverse également le trou 49 de la pièce de guidage 41 en débouchant de l'autre côté du mur où il est fixé par exemple à l'aide d'un système 50 rondelle-écrou.

Lorsque l'on désire réaliser une fixation non traversante avec l'emploi d'une cheville, telle que la cheville 23 ou la cheville 31 représentée aux figs 3 et 4, respectivement, avec laquelle coopère l'élément d'ancrage, tel que l'élément d'ancrage 34, dans le cas où la cheville 23 ou 31 est liée à la pièce de guidage 21 ou 30, respectivement, en formant un élément monobloc avec elle, ce procédé comprend l'enfoncement simultané de l'ensemble cheville-pièce de guidage, par exemple à l'aide d'outils pneumatiques ou pistolets fixateurs à cartouches, puis on solidarise l'élément d'ancrage, tel que l'élément 34 de la cheville 23 en provoquant ainsi son expansion.

Dans le cas où la cheville n'est pas liée préalablement à la pièce de guidage, on fore préalablement dans la paroi un trou borgne profond sensiblement au diamètre extérieur de la cheville, on enfonce la cheville jusqu'au fond de ce trou borgne puis on enfonce dans le trou borgne pardessus la cheville la pièce de guidage et enfin on solidarise l'élément d'ancrage de la cheville.

On doit noter que si l'on emploie des appareils de fixation, notamment à cartouche ou à percussion pour introduire la pièce de guidage ou l'ensemble pièce de guidage-cheville, on adopte des sections transversales plus faibles pour la pièce de guidage.

Enfin, on peut noter que le dispositif de fixation de la présente invention peut être adapté à l'emploi de clous à déviation 1, comme représenté à la fig. 1 et dans ce cas le prolongement 6 de la pièce de guidage 2 comporte une ouverture 15 prévue à cet effet.

On doit ainsi noter que l'on peut apporter diverses modifications au dispositif de fixation de la présente invention, pourvu que l'on conserve le profil précité de la pièce de guidage lui conférant une fonction similaire à celle d'un «coin», ce qui permet, comme mentionné précédemment, d'accroître progressivement la densité du matériau constituant la paroi, constitué par exemple par du béton cellulaire, de l'intérieur de la paroi vers la face 47 extérieure de la paroi comme représenté schématiquement en 52 à la fig. 5, ce qui permet d'aboutir aux avantages mentionnés précédemment.

Comme modification possible particulièrement avantageuse, on doit noter que l'on recherche à obtenir une surface d'appui maximale de la pièce de guidage avec un nombre maximal d'arêtes. A ce sujet, la pièce de guidage 60 représentée à la fig. 6 ayant une section transversale en forme d'étoile est particulièrement préférée, cette forme d'étoile permettant d'obtenir cinq arêtes 61 qui favorisent la fixation. Dans l'exemple représenté à la fig. 6, la pièce de guidage 60 comprend également des moyens à expansion 63 à sa petite extrémité 64 constitués par une fente longitudinale 65 aboutissant sensiblement au niveau du fond 66 d'un trou borgne 67 percé depuis la face apparente 68 de la pièce de guidage 60. La petite extrémité 64 peut comprendre des pointes 69 de guidage d'insertion de la pièce 60, ces points 69 étant détruites lors de l'expansion des moyens 63.

Selon encore une autre variante particulièrement avantageuse du dispositif de fixation de la présente invention, représentée à la fig. 7, la pièce de guidage 70 peut être constituée par un profilé, ce profilé comprenant des moyens à expansion 71 comprenant un pli 72 formé en repliant l'une (73) des deux extrémités (73, 74) sur l'autre extrémité 74. Bien entendu, la face apparente 75 de la pièce de guidage 70 comporte un trou 76 permettant l'introduction et le guidage de l'élément d'ancrage. On peut faciliter le guidage de l'élément d'ancrage en prévoyant l'emploi d'une bague 77 de guidage que l'on voit en coupe à la fig. 8.

La pose de cette pièce de guidage est identique à celle mentionnée précédemment pour les modes de réalisation faisant l'objet des figs 1, 3 à 5. Cependant, les moyens à expansion 71 permettent lors de l'insertion d'un élément de guidage 78 (fig. 8) de défaire le pli 72 et de provoquer l'expansion des extrémités 73, 74, ce qui résulte en la formation d'une deuxième zone 19 de densité élevée en plus de la première zone 80 de densité élevée due au profil en coin de la pièce de guidage 70. Cette deuxième zone 79 permet, d'une part, de favoriser l'ancrage de la pièce de guidage 70 mais également de créer une zone de densité élevée en arrière d'une cheville 81 sur laquelle on solidarise l'élément d'ancrage 78. On peut accroître l'expansion des extrémités 73, 74 de la pièce de guidage 70 en insérant une tige 82 dans le trou, comme représenté à la fig. 8, ce qui permet également dans le cas où cette tige 82 comporte une extrémité 83 formant cône d'expansion, de solidariser cette tige 82 de la cheville 81 et d'en déformer la partie correspondante. Lorsque cette cheville 81 comporte sur un côté une fente 85 sur toute sa longueur, l'expansion de la partie 84 de la cheville 81 sera facilitée, de sorte que l'extrémité de la cheville 81 en regard de la pièce 70 viendra buter, au cours de la solidarisation de l'élément d'ancrage 78, contre les extrémités 73, 74, de la pièce de guidage 70 en favorisant encore leur expansion. Par ailleurs, on comprendra aisément que la cheville 81 en venant buter contre les extrémités 73, 74 de la pièce de guidage 70 ne peut plus être tirée vers la face apparente 86 de la paroi et qu'elle est en outre bloquée sur les extrémités 73, 74. En outre, on doit noter qu'à la fig. 8, l'élément d'ancrage 78 n'est pas encore complètement solidarisé de la cheville 81 et n'a pas encore provoqué l'expansion de son extrémité 87. On doit noter également que les modes de réalisation représentés aux figs 2 et 6 permettent bien entendu d'obtenir la deuxième zone 79 de densité plus élevée favorisant la fixation.

Enfin, comme modification possible, on peut signaler que le trou 28 de la pièce de guidage 21, représentée à la fig. 3, peut comprendre un taraudage 53 au moins vers la face latérale 26. Ainsi, la pièce de guidage peut comprendre en général un taraudage du trou, qu'il soit borgne ou débouchant, ce qui permet de faciliter la solidarisation de l'élément d'ancrage de la cheville et également, dans le cas d'un trou borgne tel que représenté aux figs 2 et 6, peut permettre plus facilement à l'élément d'ancrage de pénétrer dans la fente longitudinale et d'expanser la petite extrémité de la pièce de guidage.

Selon un autre mode de réalisation, en référence aux figs 9 et 11, on a représenté un dispositif de fixation d'objets sur une paroi en matériau de construction, tel que matériau dur 101 ou à faible résistance à la compression 102, bois, ou tout autre matériau de construction, qui comprend une pièce de guidage 103, coopérant éventuellement avec une cheville 104, et des éléments d'ancrage tels que vis 105 ou clous.

Selon le mode de réalisation de l'invention représenté, la pièce de guidage 103 comprend des ailettes, telles que 106 à 109, extérieurement saillantes de dimensions suffisantes pour assurer plusieurs zones de compression du matériau le cas échéant, comme dans le matériau 102 qui est, dans le cas représenté à la fig. 11, du béton cellulaire. Les ailettes 106 à 109 ont un profil général croissant, de préférence indépendant du profil de base ou âme 110 de la pièce de guidage 103, en direction de la face arrière apparente 111, de façon à obtenir un profil de la face apparente 111 de section transversale droite maximale en réalisant ainsi une compression maximale au niveau de la face apparente 111.

Avantageusement, l'âme 110 de la pièce de guidage 103 comprend au moins une partie de sa longueur constituée par un tube creux cylindrique, comme représenté, ou légèrement conique.

Selon un mode de réalisation particulier, les ailettes 106 à 109 précitées forment corps avec le tube creux cylindrique 110 ou légèrement conique et sont de section transversale axiale généralement croissante vers la face apparente 111 afin d'obtenir une conicité importante des profils extérieurs de la pièce de guidage 103.

Selon un autre mode de réalisation particulier des ailettes, au moins certaines des ailettes 106 à 109 ont leur profil de base de largeur décroissante sur au moins une partie de la longueur de la pièce de guidage 103 depuis la partie arrière 111 de la pièce de guidage 103 vers le nez 112 de la pièce de guidage de manière à aboutir à un affinement des ailettes 106 à 109 au voisinage du nez 112 de la pièce de guidage 103 comme on le voit bien à la fig. 9.

Selon encore un autre mode de réalisation particulier, les ailettes 106 à 109 sont suffisamment espacées entre elles pour laisser apparaître le profil de l'âme 110 de la pièce de guidage 103 dans les creux, tels que 113, 114, 115, 116 formés entre les ailettes 106 à 109, au moins sur la plus grande partie de la pièce depuis le nez 112 vers la face apparente 111. Cet affinement des ailettes permet de contrôler la valeur et la direction des zones de compression ainsi créées autour de la pièce, l'affinement permettant de plus de favoriser l'écrasement des ailettes dans les matériaux durs tout en ménageant les possibilités d'aération dans les creux puisque les ailettes ne sont jamais totalement détruites lors d'un enfoncement à force, et de permettre enfin l'injection de matériau injectable.

En outre, selon l'exemple représenté aux figs 9 à 11, les ailettes 106 à 109 sont symétriques. Cependant, selon une variante de réalisation, les ailettes peuvent être asymétriques.

Selon l'exemple représenté aux figs 9 et 11, particulièrement avantageux, la pièce de guidage 103 comprend quatre ailettes et bien entendu, la pièce de guidage peut comprendre un nombre quelconque d'ailettes.

Ainsi, comme on peut le voir à partir de la fig. 11, lors de l'insertion du nez 112 de la pièce de guidage 103 dans du béton dur, la partie affinée 118 des ailettes 106 à 109 sera écrasée par le béton dur en créant ainsi des zones de grippage, tandis que la partie arrière 119 des ailettes 106 à 109 réalise une forte compression du matériau 102 constitué par du béton cellulaire par exemple, les ailettes créant des zones de compression orientées et réduisant ainsi les risques d'éclatement du matériau comprimé tout en réservant une certaine compression de l'âme de la pièce conique telle que représentée précédemment aux figs 1 à 8. On peut donc constater qu'on obtiendra une fixation très efficace avec ce dispositif grâce à la combinaison de la pièce de guidage 103 avec les ailettes 106 à 109, la cheville 104 et l'élément d'ancrage 105 passant par le trou 120 de la pièce de guidage 103.

En référence à la fig. 10, selon un autre mode de réalisation de la pièce de guidage 121, les ailettes 122 à 125 ont un profil inégal, ledit profil étant cependant maximal vers la face apparente 126.

Avantageusement, les ailettes 122 à 125 ont un profil de pente différente depuis le nez 127 de la pièce de guidage 121 vers la face arrière apparente 126 de la pièce de guidage 121.

Selon une caractéristique particulière de cette pièce de guidage 121, au moins certaines des ailettes 122 à 125 ont le profil de base de largeur sensiblement constante sur au moins une partie de la longueur de la pièce de guidage 121.

Selon encore une autre caractéristique particulière, les ailettes 122 à 125 peuvent être progressivement arasées en 128, 129 en direction du nez 127 de la pièce de guidage 121 de manière à aboutir à la base ou âme 130 de la pièce 121 au voisinage du nez 127 de la pièce de guidage 121.

Selon encore une autre caractéristique, la pièce de guidage 121 a une âme 120 conique, les ailettes 122 à 125 étant réalisées par passage de la pièce conique 121 dans une filière appropriée de section constante pour réaliser des creux tels que 131, 132 définissant lesdites ailettes.

Par ailleurs, la pièce de guidage 121 peut comprendre un ou plusieurs orifices 133 formant évent d'injection pour combler les creux du matériau.

Ainsi, comme représenté à la fig. 12, les parties arasées, telles que 128, 129 des ailettes 122, 123 fournissent une meilleure surface d'appui, de grippage et de réaction à la charge radiale du dispositif de fixation, comme ce pourrait être le cas en maçonnerie.

En outre, lorsqu'une partie du matériau est dure, et par exemple constituée par une pierre 134, une partie correspondante 135 d'une ailette 124 est écrasée et réalise un grippage de la pièce de guidage 121. Par ailleurs, les évents d'injection 133 et le trou 136 de la pièce de guidage 121 permettent de réaliser l'injection de produits, notamment chimiques, permettant de combler des trous dans le matériau de construction afin d'améliorer la fixation de la pièce de guidage 121.

Selon encore un autre mode de réalisation représenté à la fig. 13, la pièce de guidage 140 comprend des ailettes 141a à 143a dont le profil dans une région 144 proche du nez 145 de la pièce de guidage 140 est à faible pente $\beta$ tandis que le profil des ailettes 141 à 143 dans une région proche de la face arrière apparente 146 de la pièce de guidage 140 est à forte pente $\alpha$, afin d'obtenir une fixation dans un bi-matériau, comme celui représenté à la fig. 11, le nez 145 de la pièce étant par exemple dans un matériau dur, tandis que la face arrière apparente 146 de la pièce de guidage 140 est dans un matériau compressible. De même, la pièce de guidage 140 peut comporter des orifices 147 formant évent d'injection dans la zone 148 à forte pente $\alpha$, comme pour le mode de réalisation des figs 10 et 12.

Par ailleurs, selon une autre caractéristique particulière, l'âme 149 de la pièce de guidage 140 dans la région 144 proche du nez 145 de la pièce de guidage peut être cylindrique ou légèrement conique tandis que l'âme 149 de la pièce de guidage 140 dans la région 148 proche de la face arrière 146 de la pièce de guidage peut être conique, comme représenté à la fig. 13. De ce fait, le dispositif de fixation comprenant une telle pièce de guidage 140 est particulièrement adapté pour une fixation bi-matériau telle que celle représentée précédemment à la fig. 11. De même, les ailettes à profil de forte pente $\alpha$ peuvent avoir un profil de base de largeur décroissante depuis la partie arrière 146 vers le nez 145 de la pièce de guidage 140 de manière à aboutir à un affinement des ailettes au niveau de jonction 150 avec les ailettes à profil de faible pente $\beta$ qui ont elles un profil de base de largeur sensiblement constante, comme représenté à la fig. 13. Ceci permet d'améliorer encore la fixation dans un bi-matériau.

En référence aux figs 14 et 15, selon encore un autre mode de réalisation du dispositif de fixation de la présente invention, la pièce de guidage 151 peut comprendre au moins une (152) des ailettes 152, 153, 154 comprenant dans sa masse un orifice 155, 156 d'axe généralement parallèle à l'axe X–X de la pièce de guidage 151 depuis la face arrière 157 vers le nez 158 de la pièce de guidage 151. L'orifice 155, 156 est débouchant sur le flanc de l'ailette 152, 154 afin de permettre le passage d'un élément d'ancrage 159, 160, annexe tel qu'un clou à déviation, comme représenté. On doit noter que chaque orifice débouchant 155, 156 peut avoir une forme coudée 155a, 156a au niveau du flanc de son ailette associée 152, 154 permettant de dévier l'élément d'ancrage 159, 160, comme représenté pour l'élément d'ancrage 159 enfoncé dans le matériau 161, tel que du béton cellulaire. De manière générale, on peut pourvoir la pièce de guidage 151 de moyens d'insertion dans le matériau d'élément(s) d'ancrage annexe(s).

On a représenté à la fig. 14, une combinaison de la pièce de guidage 151 avec une cheville chimique 162 comportant des perforations 163 permettant l'injection de produits chimiques destinés à combler les creux du matériau de construction pour assurer une meilleure fixation, lesdits produits chimiques étant introduits par le trou 164 de la pièce de guidage 151.

Par ailleurs, on voit bien à la fig. 15 le positionnement des orifices débouchants 155, 156 prévus dans les ailettes 152, 154. Les deux autres ailettes peuvent également être pourvues d'orifices débouchants, comme représenté.

On doit noter que les ailettes permettent de réaliser grâce aux creux définis entre elles une aération autour de la fixation même lorsqu'elles sont écrasées, ce qui est particulièrement avantageux en milieu salpêtré ou acide.

Bien entendu, la présente invention n'est nullement limitée aux modes de réalisation décrits et représentés qui n'ont été donnés qu'à titre d'exemple.

Ainsi, on peut combiner toutes les formes de réalisation précitées entre elles. La pièce de guidage peut être partiellement cylindrique ou légèrement conique, puis conique ou doublement conique, etc..., tandis que la forme des ailettes peut être quelconque. Cependant, comme mentionné précédemment, on pourra adapter sur chaque partie déterminée de la pièce de guidage un profil des ailettes spécifique ayant une pente donnée selon le type de matériau dans lequel on doit fixer un objet (tel qu'un bois de parement 165 représenté à la fig. 14).

Les ailettes, de par les résultantes des zones de compression qu'elles créent, permettent à la fois d'obtenir une bonne résistance aux vibrations (radiales) tout en limitant les risques de fissuration du matériau.

Par ailleurs, selon une variante de réalisation représentée à la fig. 17, les ailettes 170 à 173 de la pièce de guidage 174 peuvent être creuses comme représenté à la fig. 17, les bords latéraux (170a, 170b; 171a, 171b; 172a, 172b; 173a, 173b) de chaque ailette 170; 171; 172; 173 sont normalement appliqués l'un contre l'autre comme représenté à la fig. 17.

Le procédé de fabrication de cette pièce de guidage 174 est particulièrement simple. Selon un procédé de fabrication de la pièce de guidage 174, on réalise un premier emboutissage d'une tôle ou plaque plane pour obtenir un cône 167 comportant un trou borgne 168 ayant un nez 169 dont on peut favoriser l'arrachement en réalisant une ligne de prédécoupe A. La deuxième étape de ce procédé de fabrication consiste à réaliser un deuxième emboutissage pour conformer les ailettes afin d'obtenir la forme représentée à la fig. 17, le nez 169 ayant été arraché.

Si on enfonce l'élément d'ancrage formé par la vis conique auto-taraudeuse 176 représentée à la fig. 19 dans la pièce de guidage 174 représentée à la fig. 17, on obtient une expansion sur toute la longueur de la pièce de guidage 174 comme représenté à la fig. 18, ce qui permet de créer une compression du matériau le cas échéant.

En référence à la fig. 20, on a représenté une variante du procédé de fabrication de la première ébauche selon laquelle on réalise un premier emboutissage d'une tôle ou plaque plane pour former un tronc de cône 177 par roulage comportant éventuellement une collerette de retenue 178 dont on solidarise ensuite les bords latéraux 177a, 177b par exemple par soudure par points 179. Ensuite, on réalise un deuxième emboutissage pour former les ailettes et on obtient alors une pièce de guidage analogue à celle représentée à la fig. 17.

Ce mode de réalisation est particulièrement adapté pour réaliser une fixation traversante telle que celle représentée à la fig. 21, dans des murs en matériau mou 180, des cloisons de faible épaisseur, des menuiseries en aggloméré.

A la fig. 21, on a représenté deux premières pièces de guidage 181, 182 enfoncées de chaque côté 183, 184 du mur 180 pour être mises nez contre nez puis on a posé par exemple un bois de parement 185, 186 de chaque côté du mur 180. On a alors enfoncé deux nouvelles pièces de guidage 187, 188 à l'intérieur des pièces de guidage 181, 182, respectivement, ce qui a permis d'expanser les pièces de guidage 181, 182. Enfin, on a introduit à l'intérieur des pièces de guidage 187, 188 un élément d'ancrage 189, de manière à expanser les pièces de guidage 187, 188, et l'élément d'ancrage 189 a été bloqué en position à l'aide de moyens de verrouillage tels qu'un écrou 190.

On peut signaler en outre que les modes de réalisation des figs 9 et 14 concernent des pièces de guidage universelles utilisables dans des matériaux mous tels que par exemple syporex, béton cellulaire. Le mode de réalisation de la fig. 10 peut être appliqué en maçonnerie, dans les matériaux durs par exemple, bardage, rénovation tandis que les modes de réalisation des figs 11 et 13 sont avantageux dans les matériaux mous et durs combinés par exemple isolation-habitation.

De ce fait, avec le mode de réalisation des figs 17, 18 et 21, on obtient avantageusement quatre familles d'application.

On doit noter que comme pré-ébauche de la pièce de guidage 177 de la fig. 20, on peut réaliser un premier emboutissage pour former un pliage en accordéon d'une tôle ou plaque plane, de sorte que l'ébauche finalement obtenue à la figs 20 comporte déjà des ailettes creuses. On peut rajouter que, avantageusement, comme représenté notamment aux figs. 9, 10, 17, 18, les ailettes peuvent être régulièrement réparties autour de la pièce de guidage.

Comme autres modifications possibles, on peut signaler que l'on peut pré-solidariser la cheville de la pièce de guidage en prévoyant un cône intérieur à la petite extrémité de la pièce de guidage, ou cône «femelle» dans lequel vient pénétrer le bord de la cheville correspondant prévu de forme appropriée, par exemple en forme de cône; au lieu de le prévoir saillant, ou sous forme de cône «mâle» comme représenté aux figs 1, 3 à 6. De ce fait, la cheville venant pénétrer dans le cône intérieur à la pièce de guidage, lorsqu'on insérera l'élément d'ancrage, il en résultera une expansion simultanée de la cheville et de la pièce de guidage en les écrasant l'une contre l'autre et on aboutira au même résultat que celui représenté à la fig. 8, c'est-à-dire en ayant l'extrémité de la cheville favorisant l'expansion de la petite extrémité de la pièce de guidage, aboutissant à une meilleure fixation.

De même, on peut prévoir l'étoile représentée à la fig. 6 en d'autres variantes, de forme hélicoïdale.

On peut alors la disposer dans le matériau à l'aide d'une perceuse en l'enfilant sur la mèche portante de la perceuse, ce qui permet d'agrandir le trou préalablement foré dans la paroi. On peut ensuite terminer l'enfoncement par frappage. Dans le mode de la fig. 5, les extrémités 43, 44 peuvent être à expansion. Par ailleurs, la pièce de guidage peut être en tout matériau approprié présentant un intérêt particulier, par exemple en bois à cause de son faible coût, en acier à cause de sa dureté, en matière plastique pour ses possibilités de moulage par injection, etc.

Comme application particulièrement intéressante du dispositif de fixation de la présente invention, on peut citer par exemple l'emploi comme support de gonds pour volets et portes de bâtiment ou d'huisserie, etc...

**Revendications**

1. Dispositif de fixation d'objets sur une paroi en matériau de construction, dispositif comportant un élément d'ancrage (1, 34), tel qu'un clou à déviation (1) ou une vis (34) coopérant avec une cheville à expansion (23, 31), cet élément (1) s'ancrant principalement par sa partie éloignée de la surface de ladite paroi; caractérisé en ce que le dispositif comporte également une pièce de guidage (2, 30, 21) formant douille de longueur suffisante pour assurer un ancrage à grande profondeur axiale et qui comporte sur son axe longitudinal un trou (3) dans lequel est introduit et guidé l'élément d'ancrage (1, 34) au moins sur sa partie qui est proche de la surface de ladite paroi, et en ce que la section transversale droite de la pièce de guidage (2, 30, 21) est croissante sur la plus grande partie de sa longueur utile, vers l'extrémité apparente (4) destinée à affleurer la surface de la paroi en position montée, cette section croissante réalisant par enfoncement de la pièce de guidage (2) dans ledit matériau une compression progressive de la zone superficielle dudit matériau au contact de la pièce de guidage, cette compression étant maximale vers ladite extrémité apparente (4).

2. Dispositif selon la revendication 1, caractérisé en ce que l'extrémité de petite section (5) ou petite extrémité, comprend des moyens d'expansion (16).

3. Dispositif selon la revendication 2, caractérisé en ce que le trou précité est borgne (17) et en ce que les moyens à expansion (16) comprennent une fente longitudinale (19) aboutissant sensiblement au niveau du fond (17a) de ce trou borgne (17).

4. Dispositif selon la revendication 1, caractérisé en ce que le trou (3) précité est débouchant en traversant ainsi de part en part la pièce de guidage (2).

5. Dispositif selon l'une des revendications 1 à 4, caractérisé en ce que la pièce de guidage (2) a un profil général sensiblement pyramidal à section transversale approximativement polygonale.

6. Dispositif selon l'une des revendications 1 à 4, caractérisé en ce que la pièce de guidage (2) a un profil général sensiblement conique à section transversale approximativement curviligne y compris circulaire.

7. Dispositif selon l'une des revendications 1 à 4, caractérisé en ce que la pièce de guidage (2) a un profil externe général torsadé ou hélicoïdal.

8. Dispositif selon l'une des revendications précédentes, caractérisé en ce que la pièce de guidage a au moins l'une (7) de ses faces terminales (7, 8) sensiblement plane, de préférence la face terminale (7) apparente de la pièce (2), cette face (7) étant disposée avantageusement dans un plan approximativement perpendiculaire à l'axe longitudinal de la pièce de guidage (2).

9. Dispositif selon l'une des revendications précédentes, caractérisé en ce que la pièce de guidage (2) comporte au moins en partie sur ses faces latérales externes (9, 10) et/ou sur ses arêtes (11, 12) des éléments (13) extérieurement saillants, tels que des ailettes, rugosités de surface, languettes, crantages, améliorant l'accrochage ou ancrage dans le matériau de construction précité.

10. Dispositif selon l'une des revendications précédentes, caractérisé en ce que la pièce de guidage comporte des arêtes de section croissante dans la direction de l'extrémité apparente (7) précitée, ladite section croissante des arêtes étant due à la conicité de la pièce de guidage (2).

11. Dispositif selon l'une des revendications 1 à 10, caractérisé en ce que la pièce de guidage (103, fig. 9) comprend des ailettes (106 à 109) extérieurement saillantes de dimension suffisante pour assurer plusieurs zones de compression du matériau le cas échéant, lesdites ailettes (106 à 109) ayant un profil général croissant, de préférence indépendant du profil de base ou âme (110) de la pièce, en direction de la face arrière apparente (111) de façon à obtenir un profil de la face apparente (111) de section transversale droite maximale en réalisant ainsi une compression maximale au niveau de la face apparente.

12. Dispositif selon la revendication 11, caractérisé en ce que l'âme (110) de la pièce de guidage (103) comprend au moins une partie de sa longueur constituée par un tube creux cylindrique ou légèrement conique.

13. Dispositif selon la revendication 12, caractérisé en ce que les ailettes précitées (106 à 109) forment corps avec le tube creux cylindrique (110) ou légèrement conique précité et sont de section transversale axiale généralement croissante vers la face apparente (111) afin d'obtenir une conicité importante de la pièce (103).

14. Dispositif selon l'une des revendications 11 à 13, caractérisé en ce que les ailettes (106 à 109) ont un profil inégal, ledit profil étant cependant maximal vers la face apparente.

15. Dispositif selon l'une des revendications 11 à 14, caractérisé en ce que les ailettes (122 à 125, fig. 10) ont un profil de pente différente depuis le nez (127) de la pièce de guidage (2) vers la face arrière apparente (126) de ladite pièce de guidage (121).

16. Dispositif selon la revendication 15, caractérisé en ce que le profil des ailettes (141a à 143a, fig. 13) dans une région proche (144) du nez (145) de la pièce de guidage (140) est à faible pente (β) tandis que le profil des ailettes (141 à 143) dans une région proche de la face arrière apparente (146) de la pièce est à forte pente (α), afin d'obtenir une fixation dans un bi-matériau, le nez (145) de la pièce étant par exemple dans un matériau dur tandis que la face arrière apparente (146) de la pièce de guidage (140) est dans un matériau compressible.

17. Dispositif selon l'une des revendications 11 à 16, caractérisé en ce qu'au moins certaines des ailettes (122 à 125, fig. 10) ont leur profil de base de largeur sensiblement constante sur au moins une partie de la longueur de la pièce de guidage (121).

18. Dispositif selon l'une des revendications 11 à 17, caractérisé en ce que l'âme (120) de la pièce de guidage (121) comprend au moins une partie de sa longueur conique, les ailettes (122 à 125) précitées étant réalisées par passage de la pièce conique (121) dans une filière appropriée pour réaliser des creux (131, 132) définissant lesdites ailettes.

19. Dispositif selon l'une des revendications 11 à 18, caractérisé en ce qu'au moins certaines des ailettes (106 à 109, fig. 9) ont leur profil de base de largeur décroissante sur au moins une partie de la longueur de la pièce (103) depuis la partie arrière (111) vers le nez (112) de la pièce de guidage, de manière à aboutir à un affinement des ailettes (106 à 109) au voisinage du nez (112) de la pièce de guidage.

20. Dispositif selon l'une des revendications 11 à 19, caractérisé en ce que l'âme (149, fig. 13) de la pièce de guidage (140) dans la région (144) proche du nez (145) est cylindrique ou légèrement conique tandis que l'âme (149) de la pièce de guidage (140) dans la région (148) proche de la face arrière (146) de la pièce de guidage est conique.

21. Dispositif selon l'une des revendications 16 à 20, caractérisé en ce que les ailettes (141 à 143) à profil de forte pente (α) ont un profil de base de largeur décroissante depuis la partie arrière (146) vers le nez (145), de manière à aboutir à un affinement des ailettes au niveau de jonction (150) avec les ailettes (141a à 143a) à profil de faible pente (β) qui ont elles un profil de base de largeur sensiblement constante.

22. Dispositif selon l'une des revendications 11 à 21, caractérisé en ce que la pièce de guidage (151) comprend des moyens d'insertion (155, 156, figs 14, 15) dans le matériau d'au moins un élément d'ancrage annexe (159, 160).

23. Dispositif selon la revendication 22, caractérisé en ce que les moyens précités d'insertion dans le matériau sont constitués par un orifice (155, 156) réalisé dans la masse d'au moins une ailette (152) et d'axe généralement parallèle à l'axe (X–X) de la pièce de guidage (151) depuis la face arrière (157) de la pièce de guidage vers le nez (158) de ladite pièce, ledit orifice (155, 156) débouchant sur le flanc de ladite ailette afin de permettre le passage d'un élément d'ancrage annexe (159, 160), tel qu'un clou à déviation.

24. Dispositif selon l'une des revendications 11 à 23, caractérisé en ce que les ailettes (122 à 125, fig. 10) sont progressivement arasées (en 128, 129) en direction du nez (127) de la pièce de guidage (121) de manière à aboutir à la base ou âme (130) de la pièce de guidage (121) au voisinage du nez (127) de la pièce de guidage (121).

25. Dispositif selon l'une des revendications 11 à 24, caractérisé en ce que les ailettes (106 à 109, fig. 9) sont suffisamment espacées entre elles pour laisser apparaître le profil de l'âme (110) de la pièce de guidage (103) dans les creux (113 à 116) formés entre les ailettes (106 à 109), au moins sur la plus grande partie de la pièce de guidage depuis le nez (112) vers la face apparente (111).

26. Dispositif selon l'une quelconque des revendications 11 à 25, caractérisé en ce que la pièce de guidage (151, fig. 14) comprend un ou plusieurs orifices (163) formant évent d'injection pour combler les creux du matériau.

27. Dispositif selon l'une des revendications 11 à 26, caractérisé en ce que les ailettes sont asymétriques.

28. Dispositif selon l'une des revendications 11 à 26, caractérisé en ce que les ailettes sont symétriques.

29. Dispositif selon l'une des revendications 11 à 28, caractérisé en ce qu'il comprend quatre ailettes.

30. Dispositif selon l'une des revendications 11 à 29, caractérisé en ce que les ailettes (170 à 173, fig. 17) précitées sont creuses.

31. Dispositif selon la revendication 30, caractérisé en ce que les bords latéraux internes (170a et b à 173a et b) de chaque ailette sont normalement appliqués l'un contre l'autre.

32. Dispositif selon l'une des revendications 11 à 31, caractérisé en ce que les ailettes sont régulièrement réparties autour de la pièce de guidage.

33. Dispositif selon l'une des revendications 1 à 32, caractérisé en ce que l'extrémité (5, fig. 1) de la pièce de guidage de plus petite section, ou petite extrémité comprend un prolongement (6) en forme de tige creuse, disposé sensiblement selon l'axe longitudinal de la pièce de guidage (1).

34. Dispositif selon la revendication 33, caractérisé en ce que l'extrémité (14) ou nez du prolongement (6) précité formant tige de la pièce de guidage (2) est conique tronquée, le sommet du cône étant dirigé vers l'extérieur.

35. Dispositif selon la revendication 33 ou 34, pour coopération avec une cheville classique, caractérisé en ce que l'extrémité (14) ou nez du prolongement (6) formant tige de la pièce de guidage comprend des moyens de liaison avec ladite cheville, tels que denture, crantage ou taraudage, coopérant avec des moyens complémentaires prévus à l'extrémité de la cheville.

36. Dispositif selon l'une des revendications 1 à 35, caractérisé en ce que la pièce de guidage (2) est monobloque moulée, et, de préférence, lorsqu'elle est utilisée en combinaison avec une cheville, l'ensemble pièce-cheville est réalisé en un seul élément monobloc rigide.

37. Dispositif selon l'une des revendications 2, 5, 6, 8, 9, 11 à 36, caractérisé en ce que la pièce de guidage (70, fig. 7) est constituée par un profilé, les moyens à expansion (71) précités comprenant un pli (72) formé en repliant l'une (73) des deux extrémités (73, 74) du profilé sur l'autre extrémité.

38. Dispositif selon l'une des revendications 1 à 37, caractérisé en ce qu'au moins la pièce de guidage précitée est réalisée en une matière métallique oxydable se recouvrant d'une couche externe superficielle d'oxyde fortement adhérente, rugueuse et inaltérable, de préférence constituée en aluminium ou un alliage d'aluminium.

39. Dispositif selon l'une des revendications précédentes, caractérisé en ce qu'il comprend des moyens d'adaptation de la face latérale de l'extrémité de plus grande section, ou face de frappage (26), à des appareils de fixation notamment à cartouche ou à percussion.

40. Disposition selon l'une des revendications précédentes, caractérisé en ce que la grande extrémité de frappage (26) de la pièce de guidage comprend une collerette de retenue (27).

41. Procédé de fabrication du dispositif selon l'une des revendications 30 à 32 dont la pièce de guidage comprend des ailettes creuses, caractérisé en ce qu'on réalise un premier emboutissage d'une tôle ou plaque plane pour former un cône ou un tronc de cône, puis on réalise un deuxième emboutissage pour réaliser les ailettes précitées de préférence avec les bords latéraux internes de chaque ailette appliqués l'un contre l'autre.

42. Procédé selon la revendication 41, caractérisé en ce que lorsque le premier emboutissage forme un tronc de cône par roulage, on solidarise les bords latéraux libres par exemple par soudure.

**Claims**

1. A device for fastening objects on a wall of building material, the said device comprising an anchoring element (1, 34), such as a deviating nail (1) or a screw (34) co-operating with an expandable sleeve (23, 31), the said element (1) anchoring itself mainly by its portion farthest from the surface of the said wall, characterized in that the device also comprises a guiding member (2, 30, 21) forming a bushing of sufficient length to ensure anchoring at a great axial depth and which is provided along its longitudinal axis with a hole (3) in which is introduced and guided the anchoring element (1, 34) at least on its portion nearest to the surface of the said wall, and in that the guiding member (2, 30, 21) increases in cross-section along the greater portion of its useful length, towards the apparent end (4) intended in its mounted position to be flush with the surface of the wall, the said increasing cross-section ensuring, as the guiding member (2) is driven into the said material, a progressive compression of the superficial region of the said material in contact with the guiding member, the said compression being maximum towards the said apparent end (4).

2. A device according to claim 1, characterized in that the end of smaller section (5), or smaller end, comprises expandable means (16).

3. A device according to claim 2, characterized in that the said hole is blind (17) and in that the expandable means (16) include a longitudinal slit (19) extending substantially to the region of the bottom (17a) of the blind hole (17).

4. A device according to claim 1, characterized in that the said hole (3) is a through hole extending from one end to the other end of the guiding member (2).

5. A device according to one of claims 1 to 4, characterized in that the guiding member (2) has a substantially pyramidal general profile approximately polygonal in cross-section.

6. A device according to one of claims 1 to 4, characterized in that the guiding member (2) has a substantially conical general profile approximately curvilinear, e.g. circular, in cross-section.

7. A device according to one of claims 1 to 4, characterized in that the guiding member (2) has a twisted or helical general external profile.

8. A device according to one of the foregoing claims, characterized in that at least one (7) of the end faces (7, 8) of the guiding member is substantially plane, preferably the apparent end face (7) of the member (2), the said face (7) being arranged advantageously in a plane approximately perpendicular to the longitudinal axis of the guiding member (2).

9. A device according to one of the foregoing claims, characterized in that the guiding member (2) is provided at least partially on its external lateral faces (9, 10) and/or on its edges (11, 12) with externally projecting elements (13), such as fins, surface irregularities, tongues, notches, improving the clinging or anchoring in the aforesaid building material.

10. A device according to one of the foregoing claims, characterized in that the guiding member is provided with ridges increasing in cross-section towards the aforesaid apparent end (7), said increasing section of the ridges being due to the conicity of the guiding member (2).

11. A device according to one of claims 1 to 10, characterized in that the guiding member (103, Fig. 9) comprises outwardly projecting ribs (106 to 109) of a sufficient dimension to provide several regions of compression of the material, if appropriate, the said ribs (106 to 109) having a general profile preferably independent of the profile of the base or core (110) of the member and increasing towards the apparent rear face (111) so as to obtain a profile of the apparent face (111) of maximum cross-section, thus ensuring maximum compression in the region of the apparent face.

12. A device according to claim 11, characterized in that the core (110) of the guiding member (103) comprises at least a portion of its length formed of a cylindrical or slightly conical hollow tube.

13. A device according to claim 12, characterized in that the aforesaid ribs (106 to 109) are integral with the aforesaid cylindrical hollow tube (110) or slightly conical tube and are of generally increasing axial section towards the apparent face (111) so as to obtain an important conicity of the member (103).

14. A device according to one of claims 11 to 13, characterized in that the ribs (106 to 109) are unequal in profile, the said profile being however maximum towards the apparent face.

15. A device according to one of claims 11 to 14, characterized in that the ribs (122 to 125, Fig. 10) have a profile sloping differently from the nose (127) of the guiding member (2) towards the apparent rear face (126) of the said guiding member (121).

16. A device according to claim 15, characterized in that the ribs (141a to 143a), in a region (144) near the nose (145) of the guiding member (140) have a profile with a slighter slope ($\beta$), whereas the ribs (141 to 143) in a region near the apparent rear face (146) of the said member have a profile with a greater slope ($\alpha$), so as to obtain a fastening in a bimaterial, the nose (145) of the said member being for example of a hard material whereas the apparent rear face (146) of the guiding member (140) is in a compressable material.

17. A device according to one of claims 11 to 16, characterized in that at least some of the ribs (122 to 125, Fig. 10) have a base profile of substantially constant width over at least a portion of the length of the guiding member (121).

18. A device according to one of claims 11 to 17, characterized in that the core (120) of the guiding member (121) is conical over at least a portion of its length, the aforesaid ribs (122 to 125) being obtained by passing the conical member (121) through an appropriate die to form hollows (131, 132) defining the said ribs.

19. A device according to one of claims 11 to 18, characterized in that at least some of the ribs (106 to 109, Fig. 9) have a base profile of a width decreasing over at least a portion of the length of the member (103) from the rear portion (111) towards the nose (112) of the guiding member, resulting in a thinning of the ribs (106 to 109) in proximity to the nose (112) of the guiding member.

20. A device according to one of claims 11 to 19, characterized in that the core (149, Fig. 13) of the guiding member (140) in the region (144) near the nose (145) is cylindrical or slightly conical, whereas the core (149) of the guiding member (140) in the region (148) near the rear face (146) of the guiding member is conical.

21. A device according to one of claims 16 to 20, characterized in that the ribs (141 to 143) having a profile with a great slope ($\alpha$) have a base profile of decreasing width from the rear portion (146) towards the nose (145), resulting in a thinning of the ribs in the region of junction (150) with the ribs (141a to 143a) having a profile with a small slope ($\beta$) and whose base profile is substantially constant in width.

22. A device according to one of claims 11 to 21, characterized in that the guiding member (151) is provided with means (155, 156, Fig. 14, 15) for inserting into the material at least one accessory anchoring element (159, 160).

23. A device according to claim 22, characterized in that the aforesaid means of insertion into the material are constituted by an orifice (155, 156) provided in the body of at least one rib (152) and whose axis is generally parallel to the axis (X–X) of the guiding member (151) from the rear face (157) of the guiding member towards the nose (158) of the said member, the said orifice (155, 156) opening onto the flank of the said rib to allow the passage of an accessory anchoring element (159, 160), such as a deviating nail.

24. A device according to one of claims 11 to 23, characterized in that the ribs (122 to 125), Fig. 10 are progressively levelled down (at 128, 129) towards the nose (127) of the guiding member (121) so as to end at the level of the base or core (130) of the guiding member (121) in proximity to the nose (127) of the guiding member (121).

25. A device according to one of claims 11 to 24, characterized in that the ribs (106 to 109), Fig. 9 are sufficiently spaced from one another to allow the profile of the core (110) of the guiding member (103) to appear in the hollows (113 to 116) formed between the ribs (106 to 109), at least over the greater portion of the guiding member from the nose (112) towards the apparent face (111).

26. A device according to any one of claims 11 to 25, characterized in that the guiding member (151, Fig. 14) is provided with one or several orifices (163) forming injection vents for filling up the hollows of the material.

25  0 016 697  26

27. A device according to one of claims 11 to 26, characterized in that the ribs are unsymmetrical.

28. A device according to one of claims 11 to 26, characterized in that the ribs are symmetrical.

29. A device according to one of claims 11 to 28, characterized in that it comprises four ribs.

30. A device according to one of claims 11 to 29, characterized in that the aforesaid ribs (170 to 173, Fig. 17) are hollow.

31. A device according to claim 30, characterized in that the inner lateral edges (170a and b to 173a and b) of each rib are normally applied against one another.

32. A device according to one of claims 11 to 31, characterized in that the ribs are uniformly distributed round the guiding member.

33. A device according to one of claims 1 to 32, characterized in that the guiding member end (5, Fig. 1) of smaller section, or smaller end, comprises an extension (6) in the form of a hollow shank, arranged substantially along the longitudinal axis of the guiding member (1).

34. A device according to claim 33, characterized in that the end (14) or nose of the said extension (6) forming the shank of the guiding member (2) is in the shape of a truncated cone, the top of the cone being directed outwardly.

35. A device according to claim 33 or 34, intended to co-operate with a conventional retainer sleeve, characterized in that the end (14) or nose of the extension (6) forming the shank of the guiding member is provided with means of connection with the said sleeve, such as teeth, notches or a thread, co-operating with complementary means provided at the end of the sleeve.

36. A device according to one of claims 1 to 35, characterized in that the guiding member (2) is moulded in one piece, and, preferably, when used in combination with a retainer sleeve, the guiding member and retainer sleeve assembly is made in a single rigid element.

37. A device according to one of claims 2, 5, 6, 8, 9, 11 and 36, characterized in that the guiding member (70, Fig. 7) consists of a shape, the aforesaid expandable means (71) comprising a bend (72) formed by bending one (73) of the two ends (73, 74) of the shape over the other.

38. A device according to one of claims 1 to 37, characterized in that at least the aforesaid guiding member is made of an oxidizable metallic material becoming covered with a strongly adhering, rough and unalterable external superficial layer of oxide and consisting preferably of aluminium or an aluminium alloy.

39. A device according to one of the foregoing claims, characterized in that it comprises means for adapting the lateral face of the end of greater section, or striking face (26), to fixing apparatuses notably of the cartridge type or the percussion type.

40. A device according to one of the foregoing claims, characterized in that the larger or striking end (26) of the guiding member is provided with a retaining flange (27).

41. A method of manufacturing a device according to one of claims 30 to 32 whose guiding member comprises hollow ribs, characterized in that a first drawing is performed of a flat metal sheet or plate to form a cone or a truncated cone, and then a second drawing is performed to obtain the aforementioned ribs preferably with the internal lateral edges of each rib applied against one another.

42. A method according to claim 41, characterized in that when the first drawing forms a truncated cone by rolling, the free lateral edges are assembled to one another e.g. by welding.

**Patentansprüche**

1. Vorrichtung zur Befestigung von Gegenständen an eine Wandung aus Baustoff, mit einem dehnbaren Dübel (23, 31) zusammenwirkenden Verankerungsglied (1, 34) wie einem ablenkbaren Nagel (1) oder einer Schraube (34), wobei dieses Glied (1) sich hauptsächlich mit seinem von der Wandungsfläche abgewandten Teil verankert; dadurch gekennzeichnet, dass die Vorrichtung auch ein hülsenförmiges Führungsstück (2, 30, 21) aufweist, welches lang genug ist, um eine sehr tiefe axiale Verankerung zu gewährleisten und welches entlang ihrer Längsmittellinie ein Loch (3) umfasst, in welchem das Verankerungsglied (1, 34) wenigstens über seinen der Wandungsfläche zugewandten Teil einsteckt und geführt wird und dass der Querschnitt des Führungsstücks (2, 30, 21) über den grössten Teil seiner verwendbaren Länge in Richtung auf dasjenige sichtbare Ende (4) zunimmt, welches in der eingesetzten Lage mit der Wandoberfläche bündig sein soll, wobei dieser zunehmende Querschnitt durch Eindrücken des Führungsstücks (2) in den Baustoff ein allmähliches Zusammendrücken des mit dem Führungsstück in Berührung stehenden oberflächlichen Bereichs dieses Baustoffs herbeiführt und wobei dieses Zusammendrücken im Bereich des sichtbaren Endes (4) am grössten ist.

2. Vorrichtung nach Anspruch 1, dadurch gekennzeichnet, dass das Ende mit dem kleineren Querschnitt (5) bzw. das kleinere Ende Dehnungsmittel (16) umfasst.

3. Vorrichtung nach Anspruch 2, dadurch gekennzeichnet, dass das Loch ein Sackloch (17) ist und dass die Dehnungsmittel (16) einen im wesentlichen bis zum Boden (17a) dieses Sacklochs (17) reichenden Längsschlitz (19) aufweisen.

4. Vorrichtung nach Anspruch 1, dadurch gekennzeichnet, dass das Loch (3) durchgehend ist und somit sich durch das Führungsstück (2) erstreckt.

5. Vorrichtung nach einem der Ansprüche 1 bis 4, dadurch gekennzeichnet, dass das Führungsstück (2) einen im wesentlichen pyramidenförmigen allgemeinen Umriss mit annähernd vieleckigem Querschnitt aufweist.

6. Vorrichtung nach einem der Ansprüche 1 bis 4, dadurch gekennzeichnet, dass das Führungsstück (2) einen im wesentlichen kegelförmigen allgemeinen Umriss mit einem annähernd ge-

14

krümmten bzw. kreisförmigen Querschnitt aufweist.

7. Vorrichtung nach einem der Ansprüche 1 bis 4, dadurch gekennzeichnet, dass das Führungsstück (2) einen verdrillten bzw. schraubenförmigen allgemeinen äusseren Umriss aufweist.

8. Vorrichtung nach einem der vorangehenden Ansprüche, dadurch gekennzeichnet, dass das Führungsstück an wenigstens einer (7) seiner Endflächen (7, 8) und vorzugsweise an der sichtbaren Endfläche (7) des Stückes (2) im wesentlichen eben ist, wobei diese Fläche (7) vorteilhafterweise in einer senkrecht zur Längsmittellinie des Führungsstücks (2) verlaufenden Ebene liegt.

9. Vorrichtung nach einem der vorangehenden Ansprüche, dadurch gekennzeichnet, dass das Führungsstück (2) wenigstens teilweise an seinen äusseren Seitenflächen (9, 10) und/oder an seinen Kanten (11, 12) nach aussen vorspringende Teile (13), wie Rippen, Oberflächenrauhigkeiten, Federn, Rasten, welche das Festsetzen bzw. die Verankerung in dem Baustoff verbessern, aufweist.

10. Vorrichtung nach einem der vorangehenden Ansprüche, dadurch gekennzeichnet, dass das Führungsstück Kanten mit in Richtung auf das sichtbare Ende (7) hin zunehmenden Querschnitt aufweist, wobei der zunehmende Querschnitt der Kanten durch die Kegeligkeit des Führungsstücks (2) verursacht wird.

11. Vorrichtung nach einem der Ansprüche 1 bis 10, dadurch gekennzeichnet, dass das Führungsstück (103, Fig. 9) nach aussen vorspringende Rippen (106 bis 109) aufweist, welche gross genug sind, um das Zusammendrücken des Baustoffs gegebenenfalls in mehreren Bereichen zu gewährleisten, wobei diese Rippen (106 bis 109) einen in Richtung auf die sichtbare Hinterfläche (111) hin zunehmenden, vorzugsweise von dem Grundumriss bzw. Kern (110) unabhängigen allgemeinen Umriss aufweist, um einen Umriss der sichtbaren Fläche (111) mit dem grössten Querschnitt zu erzielen, wodurch ein grösstmögliches Zusammendrücken an der sichtbaren Fläche gewährleistet wird.

12. Vorrichtung nach Anspruch 11, dadurch gekennzeichnet, dass der Kern (110) des Führungsstücks (103) über wenigstens einen Teil seiner Länge durch ein zylindrisches bzw. leicht kegelförmiges hohles Rohr gebildet wird.

13. Vorrichtung nach Anspruch 12, dadurch gekennzeichnet, dass die Rippen (106 bis 109) einstückig mit dem zylindrischen bzw. leicht kegelförmigen Rohr ausgebildet sind und einen in Richtung auf die sichtbare Fläche (111) hin im allgemeinen zunehmenden axialen Querschnitt aufweisen, um eine bedeutende Verjüngung des Stückes (103) zu gewährleisten.

14. Vorrichtung nach einem der Ansprüche 11 bis 13, dadurch gekennzeichnet, dass die Rippen (106 bis 109) einen ungleichen Umriss aufweisen, wobei dieser Umriss jedoch am grössten an der sichtbaren Fläche ist.

15. Vorrichtung nach einem der Ansprüche 11 bis 14, dadurch gekennzeichnet, dass die Rippen (122 bis 125, Fig. 10) einen Umriss mit unterschiedlicher Neigung vom Vorderteil (127) des Führungsstücks (2) ab in Richtung auf die sichtbare Hinterfläche (126) des Führungsstücks (121) aufweisen.

16. Vorrichtung nach Anspruch 15, dadurch gekennzeichnet, dass der Umriss der Rippen (141a bis 143a, Fig. 13) in dem dem Vorderteil (145) nahen Bereich (144) des Führungsstücks (140) eine schwache Neigung ($\beta$) aufweist, während der Umriss der Rippen (141 bis 143) in dem nahe der sichtbaren Hinterfläche (146) des Stückes liegenden Bereich eine starke Neigung ($\alpha$) aufweist, zwecks Befestigung in einem sich aus zwei Bestandteilen zusammensetzenden Baustoff, wobei der Vorderteil (145) des Stückes z.B. in einem harten Baustoff und die sichtbare Hinterfläche (146) des Führungsstücks (140) in einem zusammendrückbaren Baustoff eingelassen ist.

17. Vorrichtung nach einem der Ansprüche 11 bis 16, dadurch gekennzeichnet, dass wenigstens einige der Rippen (122 bis 125, Fig. 10) einen Grundumriss mit im wesentlichen gleichbleibender Breite über wenigstens einen Teil der Länge des Führungsstücks (121) aufweisen.

18. Vorrichtung nach einem der Ansprüche 11 bis 17, dadurch gekennzeichnet, dass der Kern (120) des Führungsstücks (121) über wenigstens einen Teil seiner Länge kegelförmig ist, wobei die Rippen (122 bis 125) durch Durchziehen des kegelförmigen Stücks (121) durch eine geeignete Ziehdüse hergestellt werden, zwecks Ausbildung der die Rippen gestaltenden Hohlräume (131, 132).

19. Vorrichtung nach einem der Ansprüche 11 bis 18, dadurch gekennzeichnet, dass wenigstens einige der Rippen (106 bis 109, Fig. 9) einen Grundumriss mit über wenigstens einen Teil der Länge des Stückes (103) vom Hinterteil (111) ab in Richtung auf den Vorderteil (112) des Führungsstücks abnehmender Breite aufweisen, um eine Verfeinerung der Rippen (106 bis 109) im Bereich des Vorderteils (112) des Führungsstücks zu erzielen.

20. Vorrichtung nach einem der Ansprüche 11 bis 19, dadurch gekennzeichnet, dass der Kern (149, Fig. 13) des Führungsstücks (140) in dem nahe dem Vorderteil (145) liegenden Bereich (144) zylindrisch bzw. leich kegelförmig ist, während der Kern (149) des Führungsstücks (140) in dem nahe der Hinterfläche (146) des Führungsstücks liegenden Bereich (148) kegelförmig ist.

21. Vorrichtung nach einem der Ansprüche 16 bis 20, dadurch gekennzeichnet, dass die Rippen (141 bis 143) mit stark geneigtem ($\alpha$) Umriss einen Umriss mit von dem Hinterteil (146) ab zum Vorderteil (145) hin abnehmender Breite aufweisen, um eine Verfeinerung der Rippen im Bereich des Anschlusses (150) mit den Rippen (141a bis 143a) mit schwach geneigtem ($\beta$) Umriss, welche einen Grundumriss mit im wesentlichen gleichbleibender Breite aufweisen, zu erzielen.

22. Vorrichtung nach einem der Ansprüche 11 bis 21, dadurch gekennzeichnet, dass das Führungsstück (151) Mittel (155, 156, Fig. 14, 15) zum Einsetzen von wenigstens einem Verankerungshilfsteil (159, 160) in den Baustoff aufweisen.

23. Vorrichtung nach Anspruch 22, dadurch gekennzeichnet, dass die Mittel zum Einsetzen in den Baustoff durch eine in dem Werkstoff von wenigstens einer Rippe (152) angeordnete Öffnung (155, 156) gebildet werden, mit einer im allgemeinen mit der Achse (X–X) des Führungsstücks (151) von der Hinterseite (157) des Führungsstücks zum Vorderteil (158) desselben hin im allgemeinen gleichgerichteten Achse, wobei diese Öffnung (155, 156) in die Seitenfläche der Rippe mündet, um die Durchführung eines Hilfsverankerungsglieds (159, 160) wie eines ablenkbaren Nagels zu ermöglichen.

24. Vorrichtung nach einem der Ansprüche 11 bis 23, dadurch gekennzeichnet, dass die Rippen (122 bis 125, Fig. 10) in Richtung auf den Vorderteil (127) des Führungsstücks (121)(bei 128, 129) bis zur Grundfläche bzw. zum Kern (130) des Führungsstücks (121) im Bereich des Vorderteils (127) des Führungsstücks (121) allmählich nachgeschnitten sind.

25. Vorrichtung nach einem der Ansprüche 11 bis 24, dadurch gekennzeichnet, dass die Rippen (106 bis 109, Fig. 9) in einem genügenden Abstand voneinander angeordnet sind, um den Umriss des Kerns (110) des Führungsstücks (103) in den zwischen den Rippen (106 bis 109) gebildeten Hohlräumen (113 bis 116), wenigstens über den grössten Teil des Führungsstücks von dem Vorderteil (112) ab zur sichtbaren Fläche (111) hin erscheinen zu lassen.

26. Vorrichtung nach irgendeinem der Ansprüche 11 bis 25, dadurch gekennzeichnet, dass das Führungsstück (151, Fig. 14) eine oder mehrere ein Einspritzloch zum Ausfüllen der Hohlräume des Baustoffs bildende Öffnung bzw. Öffnungen (163) aufweist.

27. Vorrichtung nach einem der Ansprüche 11 bis 26, dadurch gekennzeichnet, dass die Rippen unsymmetrisch sind.

28. Vorrichtung nach einem der Ansprüche 11 bis 26, dadurch gekennzeichnet, dass die Rippen symmetrisch sind.

29. Vorrichtung nach einem der Ansprüche 11 bis 28, dadurch gekennzeichnet, dass sie vier Rippen umfasst.

30. Vorrichtung nach einem der Ansprüche 11 bis 29, dadurch gekennzeichnet, dass die Rippen (170 bis 173, Fig. 17) hohl sind.

31. Vorrichtung nach Anspruch 30, dadurch gekennzeichnet, dass die inneren Seitenränder (170a und b bis 173a und b) jeder Rippe normalerweise gegeneinander anliegen.

32. Vorrichtung nach einem der Ansprüche 11 bis 31, dadurch gekennzeichnet, dass die Rippen gleichmässig um das Führungsstück herum verteilt sind.

33. Vorrichtung nach einem der Ansprüche 1 bis 32, dadurch gekennzeichnet, dass das Ende (5, Fig. 1) des Führungsstücks mit kleinerem Querschnitt bzw. das kleinere Ende einen im wesentlichen entlang der Längsmittellinie des Führungsstücks (1) angeordneten, als hohlen Zapfen ausgebildeten Verlängerungsansatz (6) aufweist.

34. Vorrichtung nach Anspruch 33, dadurch gekennzeichnet, dass das Ende (14) bzw. der Vorderteil des zapfenförmigen Verlängerungsansatzes (6) des Führungsstücks (2) kegelstumpfförmig ist, wobei die Spitze des Kegels nach aussen hin gerichtet ist.

35. Vorrichtung nach Anspruch 33 oder 34, zur Zusammenwirkung mit einem herkömmlichen Dübel, dadurch gekennzeichnet, dass das Ende (14) bzw. der Vorderteil des stiftförmigen Verlängerungsansatzes (6) des Führungsstücks Mittel zur Verbindung mit diesem Dübel, wie Verzahnung, Rasten bzw. Innengewinde aufweisen, welche mit am Ende des Dübels vorgesehenen zusätzlichen Mitteln zusammenwirken.

36. Vorrichtung nach einem der Ansprüche 1 bis 35, dadurch gekennzeichnet, dass das Führungsstück (2) einstückig geformt ist und dass vorzugsweise, wenn es in Verbindung mit einem Dübel verwendet wird, die Gesamtheit Führungsstück-Dübel durch ein einziges einstückiges starres Element gebildet wird.

37. Vorrichtung nach einem der Ansprüche 2, 5, 6, 8, 9, 11 bis 36, dadurch gekennzeichnet, dass das Führungsstück (70, Fig. 7) aus einem Profil besteht, wobei die Dehnungsmittel (71) einen Falzteil (72) umfassen, welcher durch Umbiegen einer (73) der beiden Enden (73, 74) des Profils über das andere Ende gebildet wird.

38. Vorrichtung nach einem der Ansprüche 1 bis 37, dadurch gekennzeichnet, dass wenigstens das Führungsstück aus einem oxydierbaren metallischen Werkstoff besteht, welches von einer stark anhaftenden, rauhen und beständigen, vorzugsweise aus Aluminium oder einer Aluminiumlegierung bestehenden äusseren Oberflächenoxidschicht überzogen wird.

39. Vorrichtung nach einem der vorangehenden Ansprüche, dadurch gekennzeichnet, dass es Mittel zur Anpassung der Seitenfläche des Endes mit grösserem Querschnitt bzw. der Schlagfläche (26) an Befestigungsgeräte insbesondere an Sprengpatronen bzw. Schlaggeräten aufweist.

40. Vorrichtung nach einem der vorangehenden Ansprüche, dadurch gekennzeichnet, dass das grössere Schlagende (26) des Führungsstücks einen Halterungskragen (27) aufweist.

41. Verfahren zur Herstellung der Vorrichtung nach einem der Ansprüche 30 bis 32, deren Führungsstück hohle Rippen aufweist, dadurch gekennzeichnet, dass man durch Vollprägen eines ebenen Bleches bzw. einer ebenen Platte einen Kegel bzw. Kegelstumpf bildet und dass man dann durch ein zweites Vollprägen die Rippen bildet, wobei vorzugsweise die inneren Seitenränder der Rippen jeweils gegeneinander anliegen.

42. Verfahren nach Anspruch 41, dadurch gekennzeichnet, dass, wenn das erste Vollprägen einen Kegelstumpf durch Rollen bildet, man die freien Seitenränder miteinander verbindet, z.B. verschweisst.

**Fig. 1.**

**Fig. 4.**

**Fig. 3.**

**Fig. 5.**

_Fig. 2._

_Fig. 6._

_Fig. 7._

_Fig. 8._

Fig. 9.

Fig. 10.

Fig. 11.

Fig. 12.

0 016 697

*Fig. 13.*

*Fig. 14.*

*Fig. 15.*

Fig.21.

Fig.18.

Fig.15.

Fig.16.

Fig.17.

Fig.19.